# EUROPEAN PATENT APPLICATION

(11) **EP 2 840 576 A1**
(43) Date of publication of application: **25.02.2015**
(21) Application number: 13882055.0
(22) Date of filing: 20.05.2013
(51) Int. Cl.: G11C 11/34

(54) **HARD DISK AND DATA PROCESSING METHOD**

(71) Applicant: Huawei Technologies Co., Ltd., Shenzhen, Guangdong 518129 (CN)
(72) Inventor: LEI, Xiaosong, Shenzhen, Guangdong 518129 (CN)
(74) Representative: Pfenning, Meinig & Partner GbR
(86) International application number: PCT/CN2013/075928
(87) International publication number: WO 2014/186940

(57) **Abstract**

In embodiments of the present invention, an enhanced Ethernet interface is added to a hard disk, and communicates with a network based on an enhanced Ethernet protocol. The enhanced Ethernet interface is configured to communicate with the network based on the enhanced Ethernet protocol, and process a received message packet according to physical layer and link layer protocols; a first processor processes the received message packet according to transport layer and network layer protocols; a second processor processes the received message packet according to application layer service logic; and a hard disk controller performs an operation on a hard disk drive according to an instruction in the received message packet.

## Description

### TECHNICAL FIELD

The present invention relates to the field of storage technologies, and in particular, to a hard disk and a data processing method.

### BACKGROUND

Cloud computing and cloud storage are growing popular, and a big data application based on massive data storage, processing, and analysis is growing popular accordingly. Massive data storage and processing units, for example, hard disks, are indispensable for the cloud storage and big data application. A conventional hard disk provides a Media Access Control (Media Access Control, MAC) address interface by using an external control part, and within the external control part provides an application layer and a transport layer of a message packet, where connection between the external control part and a Serial Attached SCSI (Serial Attached SCSI, SAS) or serial ATA (SATA, Serial Advanced Technology Attachment) hard disk passes through an SAS or an SATA of the hard disk.
the inventor finds during the research that, the conventional hard disk does not include the external control part. In a cloud storage system that needs an external control part to provide an interface for connection, a large number of hard disks may be located in a same data center to perform local area network interconnection, for example, in the data center, or a cabinet, or a subrack. A network bandwidth condition is good, but the Transmission Control Protocol/Internet Protocol (Transmission Control Protocol/Internet Protocol, TCP/IP) supported by the conventional hard disk is suitable for cross wide area transmission, and the good bandwidth condition of the local area network cannot be effectively used, so that the favorable condition of the local area network in the cloud storage system is not used.

### SUMMARY

Embodiments of the present invention provide a hard disk and a data processing method, so as to provide a hard disk capable of implementing a more flexible device interconnecting manner, and effectively use a favorable condition of a local area network.

According to a first aspect, an embodiment of the present invention provides a hard disk, including:
an enhanced Ethernet interface, configured to communicate with a network based on an enhanced Ethernet protocol, and process a received message packet according to physical layer and link layer protocols;
a first processor, configured to communicate with the enhanced Ethernet interface, and process the received message packet according to transport layer and network layer protocols;
a second processor, configured to separately communicate with a hard disk controller and the first processor, and process the received message packet according to application layer service logic; and
the hard disk controller, configured to separately communicate with the second processor, the first processor, and the enhanced Ethernet interface, and perform an operation on a hard disk drive according to an instruction in the received message packet.

With reference to the first aspect, in a first possible implementation manner, the first processor is integrated into the enhanced Ethernet interface.

With reference to the first possible manner of the first aspect, in a second possible manner, the first processor is specifically configured to communicate with the enhanced Ethernet interface, and perform transport layer and network layer processing on the received message packet according to InfiniBand transport layer and InfiniBand network layer protocols.

With reference to the first possible manner of the first aspect, in a third possible manner, the first processor is specifically configured to communicate with the enhanced Ethernet interface, and perform transport layer and network layer processing on the received message packet according to Remote Direct Memory Access Protocol RDMAP + Direct Data Placement DDP protocol + Marker Protocol data unit Aligned MPA + Transmission Control Protocol and Internet Protocol TCP/IP.

With reference to the second or third possible manner of the first aspect, in a fourth possible manner, the first processor is integrated with a Remote Direct Memory Access RDMA engine.

With reference to the fourth possible manner of the first aspect, when the message packet received by the enhanced Ethernet interface is a first write request, the enhanced Ethernet interface is specifically configured to process the received first write request according to the physical layer and link layer protocols;
the first processor is further configured to determine that the first write request instructs to directly write data corresponding to the first write request into local hard disk memory, write in an address according to data in the first write request, and invoke the RDMA engine to directly write the data corresponding to the first write request into the local memory;
when the message packet received by the enhanced Ethernet interface is a first read request, the enhanced Ethernet interface is specifically configured to process the received first read request according to the physical layer and link layer protocols; and
the first processor is further configured to determine that the first read request instructs to directly read data corresponding to the first read request from the local memory, read out an address according to data in the first read request, and invoke the RDMA engine to directly read out the data corresponding to the first read request from the local memory.

According to a second aspect, an embodiment of the present invention provides a data processing method, applicable to a hard disk having an enhanced Ethernet interface, where the enhanced Ethernet interface communicates with a network based on an enhanced Ethernet protocol, and the hard disk is integrated with a remote memory direct access RDMA engine, and the method includes:
receiving a first write request, and processing the received first write request according to physical layer and link layer protocols; and
determining that the first write request instructs to directly write data corresponding to the first write request into local memory, processing the received first write request according to transport layer and network layer protocols, writing in an address according to data in the first write request, and invoking the RDMA engine to directly write the data corresponding to the first write request into the local memory.

With reference to the second aspect, in a first possible manner, the method further includes:
receiving a first read request, and processing the received first read request according to the physical layer and link layer protocols;
determining that the first read request instructs to directly read data from the local memory, processing the received first read request according to the transport layer and network layer protocols, reading out an address according to data in the first read request, and invoking the RDMA engine to directly read the data corresponding to the first read request from the local memory.

With reference to the first possible manner and the second possible manner of the second aspect, the method further includes:
generating a second write request for directly writing data into remote target device memory or a second read request for directly reading data, where the second write request or second read request carries a memory address of data corresponding to the second write request or second read request in the remote target device; and processing the generated second write request or second read request according to application layer service logic;
processing the second write request or the second read request, which is processed according to the application layer service logic, according to the transport layer and network layer protocols, invoking the RDMA engine to process the second write request or the second read request, and sending the processed second write request or second read request to the enhanced Ethernet interface; and
processing, by the enhanced Ethernet interface, the received second write request or second read request based on the enhanced Ethernet protocol, and sending the processed second write request or second read request to the remote target device.

Different from the conventional hard disk externally connected with a control part to provide a MAC interface, in the embodiments of the present invention, the enhanced Ethernet interface is added to the hard disk and communicates with the network based on the enhanced Ethernet protocol. This uses advantages of the enhanced Ethernet technology in flow control and time delay processing, and can support a device interconnection protocol that helps use a favorable network condition, so that a hard disk connection manner is more flexible, and a good network bandwidth condition is used.

### BRIEF DESCRIPTION OF DRAWING(S)

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of a hard disk according to an embodiment of the present invention;
FIG. 2 is a schematic structural diagram of another hard disk according to an embodiment of the present invention;
FIG. 3 is a schematic structural diagram of another hard disk according to an embodiment of the present invention;
FIG. 4 is an application scenario diagram of a hard disk according to an embodiment of the present invention; and
FIG. 5 is a schematic flowchart of a data processing method according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

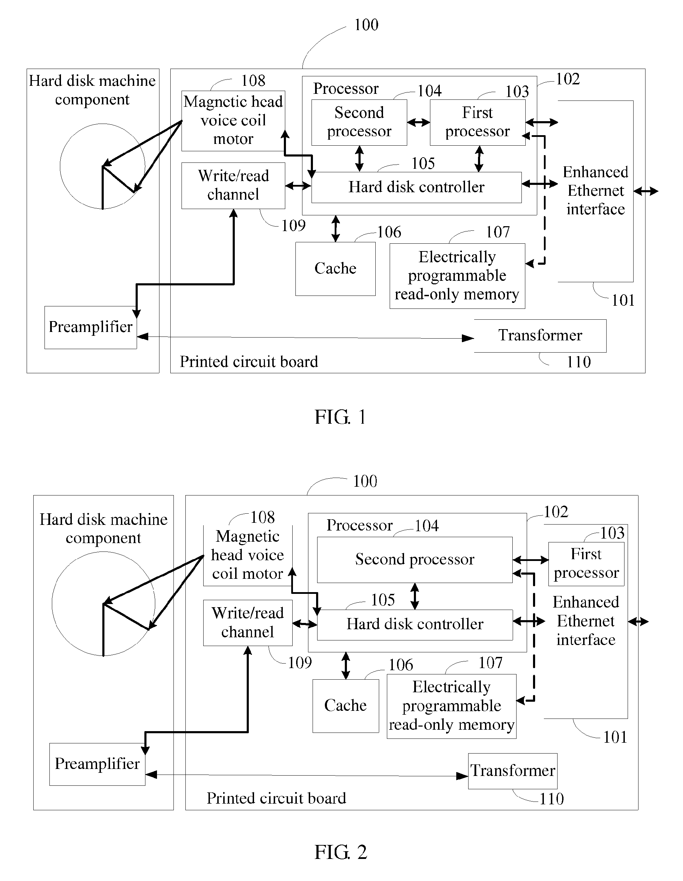

FIG. 1 is a structural diagram of a hard disk according to an embodiment of the present invention. The hard disk includes a hard disk drive (Hard Disk Drive, HDD) 100. The hard disk drive 100 includes an enhanced Ethernet interface (Enhanced Ethernet interface) 101, a first processor 104, a second processor 103, and a hard disk controller 105;
where
the enhanced Ethernet interface 101 is configured to communicate with a network based on an enhanced Ethernet protocol, and process a received message packet according to physical layer and link layer protocols.

Compared with a conventional Ethernet interface, the enhanced Ethernet interface can support more protocols, for example, can support protocols of Priority-based Flow Control Priority-based Flow Control, Enhanced Transmission Control Enhanced Transmission Control, and Data Center Bridging Capabilities Exchange Data Center Bridging Capabilities Exchange. Therefore, the enhanced Ethernet interface may further select the Priority-based Flow Control Protocol (Priority-based Flow Control, PFC), Enhanced Transmission Control Enhanced Transmission Control or Data Center Bridging Capabilities Exchange Data Center Bridging Capabilities Exchange protocol according to actual requirements, to process the received message packet. In this embodiment of the present invention, the enhanced Ethernet interface is integrated into the hard disk, so that the hard disk can support protocols included in an enhanced Ethernet interface protocol family, and implement functions corresponding to these protocols.

The enhanced Ethernet interface 101 performs frame encapsulation or frame de-encapsulation on the received message packet, and performs operations of flow control and transmission control on transmission and reception of the message packet according to requirements of the enhanced Ethernet protocol. The message packet received by the enhanced Ethernet interface 101 may be received by the enhanced Ethernet interface by using the network, may also be sent by other function modules or hardware devices of the hard disk to the enhanced Ethernet interface 101, which is not limited in this embodiment of the present invention. All message packets received by the enhanced Ethernet interface are processed based on the enhanced Ethernet protocol.

The first processor 103 is configured to communicate with the enhanced Ethernet interface 101, and process the received message packet according to transport layer and network layer protocols.

The first processor 103 usually performs transport layer and network layer processing on the received message packet. For example, the first processor performs operations of unpacketizing and packet re-sorting on the received message packet according to the TCP/IP standard protocol. Alternatively, the first processor processes the received message packet according to provisions of InfiniBand transport layer and InfiniBand network layer protocols.

Similarly, the message packet received by the first processor 103 may be a message packet processed by the enhanced Ethernet interface 101, may also be a message packet generated and processed by the second processor 104, and may also be a message packet sent by other function modules or hardware devices of the hard disk to the first processor 103, which is not limited in this embodiment of the present invention. All message packets received by the first processor 103 are processed based on the transport layer and network layer protocols.

It is worth emphasizing that, in specific implementation, the first processor may be a function module in a processor core (Core); and may also be a dedicated hardware apparatus independent of the processor core (Core), for example, be implemented by using a dedicated protocol processor.

Refer to FIG. 2. In another embodiment of the present invention, the first processor 103 may further be integrated into the enhanced Ethernet interface as a function module, and the first processor 103, together with the enhanced Ethernet interface 101, acts as a dedicated hardware apparatus independent of the processor core (Core), so that a processor core (Core) 102 of the hard disk can process service logic more intently, and resource consumption of a hard disk general processor is reduced.

The second processor 104 is configured to communicate with the hard disk controller 105, and process the received message packet according to application layer service logic.

The second processor 104 performs application layer message processing irrelevant to network transmission on the received or generated message packet, which includes, but is not limited to processing on HTTP, P2P, iSCSCI, and specified service applications. Using a big data application as an example, the second processor may execute a Map-Reduce task in Google and open source Hadoop applications.

FIG. 1 shows that the second processor 104 and the first processor are separate logically, and on an entity, the two may be physically combined but logically separate, and may also be two physically separate function modules.

After processing the message packet received by the enhanced Ethernet interface 101, the enhanced Ethernet interface 101 may send the processed message packet to the first processor 103 according to an actual situation. If it is unnecessary for the message packet processed by the enhanced Ethernet interface 101 to be processed by the first processor 103 or the second processor 104, the processed message packet can be directly sent to the hard disk controller 105. The hard disk controller 105 performs an operation on the hard disk drive (hard disk drive, HDD) according to an instruction in the received message packet. Similarly, after the first processor 103 processes the received message packet, if it is unnecessary for the processed service packet to be processed by the second processor 104, the first processor 103 may directly send the service packet to the hard disk controller 105. The hard disk controller 105 performs an operation on the HDD according to an instruction in the first message packet; and therefore:
the hard disk controller 105 is configured to separately communicate with the second processor 104, the first processor 103, and the enhanced Ethernet interface 101, and perform the operation on the HDD according to the instruction in the received message packet.

In an actual application, an application layer message packet may also be generated in the application layer. For example, in a cloud storage application, a local hard disk, as an original copy storage hard disk in a three-copy mechanism, needs to store two copies in the other hard disks, and therefore a message packet related to copy data is generated in the application layer. Alternatively, in the big data application, the local hard disk that executes a subtask needs to write generated data into another storage node to continue processing after execution is complete, and a message packet is generated in the application layer. Therefore, in this embodiment of the present invention, the second processor 104 needs to generate a message packet and processes the message packet based on an application protocol, and therefore:
the second processor 104 is further configured to generate a message packet, process the generated message packet according to the application layer service logic, and send the message packet processed according to the application layer service logic to the first processor 103.

The first processor 103 processes, according to the transport layer and network layer protocols, the message packet generated by the second processor 104, and then sends the processed message packet to the enhanced Ethernet interface 101. The enhanced Ethernet interface 101 processes the message packet according to the enhanced Ethernet protocol, and then sends the message out according to an instruction in the message packet.

In this embodiment of the present invention, the enhanced Ethernet interface is added to the hard disk. Different from the conventional hard disk externally connected with a control part to provide a MAC interface, the enhanced Ethernet interface can support more protocols, implement functions supported by these protocols, use advantages of the enhanced Ethernet protocol in flow control and time delay processing, and can select, according to a network situation, a device interconnection protocol that cannot be supported by the conventional hard disk but helps use advantages of a local area network, so that a hard disk connection manner is more flexible, and a good network bandwidth condition is used.

The hard disk provided by this embodiment of the present invention further includes parts similar to the conventional hard disk, for example:
a cache 106, an electrically programmable read-only memory 107, a magnetic head voice coil motor 108, a write and read channel 109, a transformer 110, and so on, and their functions are similar to functions of the conventional hard disk.

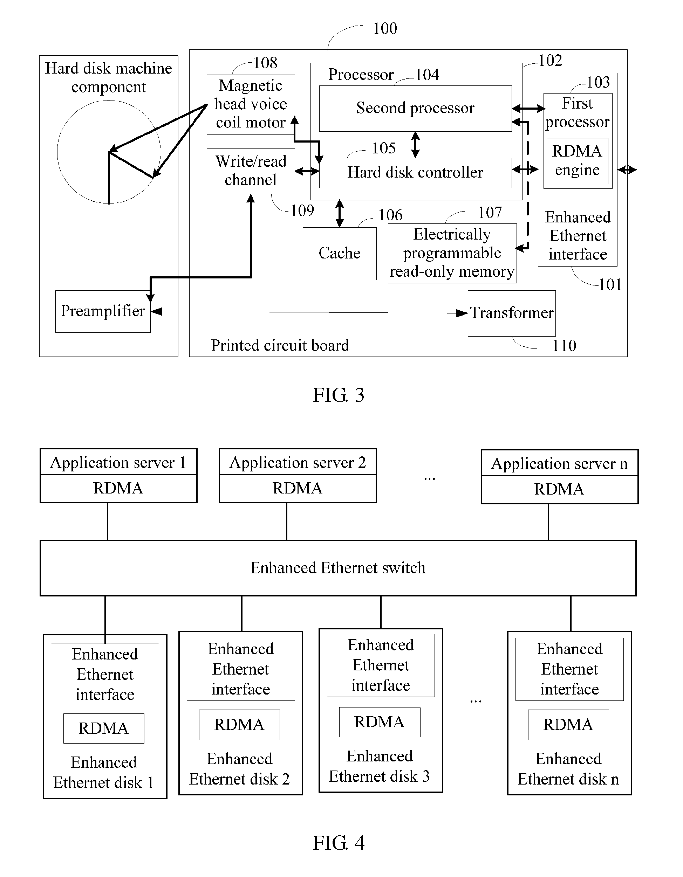

Refer to FIG. 3. An embodiment of the present invention further provides another hard disk, where a Remote Memory Direct Access (Remote Direct Memory Access, RDMA) engine is integrated into a first processor of a hard disk. Certainly, the first processor that is integrated with the RDMA engine may act as a dedicated hardware apparatus independent of a processor core (Core), for example, be implemented by using a dedicated coprocessor.

In this embodiment of the present invention, the first processor 103 may perform transport layer and application layer processing on a message. If the first processor is integrated with the RDMA engine, that the first processor 103 performs transport layer and network layer processing on a message packet may be: for example, if the message packet complies with InfiniBand transport layer and InfiniBand network layer protocols in the transport layer and the network layer, the first processor 103 may process the received message packet according to the InfiniBand transport layer and InfiniBand network layer protocols; and if the message packet complies with Remote Direct Memory Access (Remote Direct Memory Access, RDMA) protocol + Direct Data Placement (direct data placement, DDP) protocol + Marker Protocol data unit Aligned (Marker Protocol data unit Aligned, MPA) + Transmission Control Protocol and Internet Protocol (Transmission Control Protocol/Internet, TCP/IP) protocol (RDMAP+DDP+MPA+TCP/IP) in the transport layer and the network layer, the first processor 103 may process the received message packet according to the RDMAP + DDP + MPA + TCP/IP protocols.

FIG. 3 uses an example that the first processor 103 is integrated into the enhanced Ethernet interface as a function module. On the basis that the first processor 103 is integrated with the RDMA engine, when receiving read and write messages sent from a remote device, the hard disk processes the read and write messages in a way different from that of the conventional hard disk, for example:
if a message packet received by the enhanced Ethernet interface is a first write request, the enhanced Ethernet interface processes the received message packet according to an enhanced Ethernet protocol,
the network processing unit 103 is further configured to determine that the first write request instructs to directly write data into local hard disk memory, write in an address according to data in the first write request, and invoke the RDMA engine to directly write data corresponding to the first write request into the local memory; and
if the message packet received by the enhanced Ethernet interface is a first read request, after the enhanced Ethernet interface processes the received message packet according to the enhanced Ethernet protocol:
the first processor 103 is further configured to determine that the first read request instructs to directly read data from the local hard disk memory, read out an address according to data in the first read request, and invoke the RDMA engine to directly read out data corresponding to the first read request from the local memory.

Optionally, a same example that the first processor 103 is integrated into the enhanced Ethernet interface as a function module is used. On the basis that the first processor 103 is integrated with the RDMA engine, the hard disk may also generate requests for directly reading and writing data in remote device memory, and therefore:
the second processor 104 is further configured to generate a message packet, including a second write request for directly writing data into memory of a remote target device or a second read request for directly reading data, where the second write request or second read request carries a memory address of data corresponding to the second write request or second read request in the remote target device; and perform application layer processing on the generated second write request or second read request, and send the processed second write request or second read request to the first processor 103;
the first processor 103 is further configured to determine that the second write request or second read request instructs to directly write in or read out corresponding data in the memory of the remote target device, invoke the RDMA engine to process the second write request or second read request, and send the processed second write request or second read request to the enhanced Ethernet interface 101; and
the enhanced Ethernet interface 101 is specifically configured to communicate with a network based on the enhanced Ethernet protocol, process the received second write request or second read request based on the enhanced Ethernet protocol, and send the processed second write request or second read request to the remote target device.

In this embodiment of the present invention, the first processor 103 in the hard disk is integrated with the RDMA engine, an RDMA technology for Remote Direct Memory Access may be adopted among hard disks without establishing socket communication between two hard disks to perform data transfer, thereby reducing time delay and improving transmission performance.

Further, in this embodiment of the present invention, the first processor is integrated with the RDMA engine, the transport layer and the network layer may adopt the InfiniBand transport layer and InfiniBand network layer protocols, the RDMA over Converged Ethernet (RoCE) technology. Alternatively, the transport layer and the network layer adopt the improved TCP/IP protocol, for example, the RDMAP + DDP + MPA + TCP/IP protocols mentioned above. Therefore, after the RDMA technology is adopted, in a storage sub-system consisting of hard disks, the transport layer and the network layer may not adopt the conventional TCP/IP protocol that needs to perform addressing by using a hard disk IP address, an original one-layer IP (Flat IP) address manner is changed into a second-level address form, for example, a link layer address MAC, or a device ID required by InfiniBand. In addition, storage sub-systems may be interconnected by using a conventional interconnection manner, such as TCP/IP protocol, InfiniBand or PCI Express. The hard disks are aggregated into a storage sub-system by using the enhanced Ethernet protocol, and then storage sub-systems are aggregated into a storage system by using the enhanced Ethernet protocol. For example, one or more storage sub-systems may constitute a cloud storage system, where the switch may be based on a layer-2 switch, an InfiniBand switch, or a PCI Express switch. An addressing address with which each cloud storage sub-system is connected to the switch may be a device identity required by InfiniBand or a PCI Express device identity. IP addresses in the storage system are substantially reduced.

Refer to FIG. 4. FIG. 4 provides an application scenario of a hard disk provided by another embodiment of the present invention. The hard disk that provides an enhanced Ethernet interface in the embodiment of the present invention is temporarily referred to as "an enhanced Ethernet disk". In FIG. 4, an application server is interconnected with an enhanced Ethernet switch, and the enhanced Ethernet disk is interconnected with the enhanced Ethernet switch based on an enhanced Ethernet protocol. The enhanced Ethernet disk is integrated with an RDMA engine. It can be learned from the description in the foregoing embodiments that, the RDMA engine integrated into a hard disk is specifically integrated into the first processor in the hard disk.

When a certain application server needs to write data into an enhanced Ethernet disk 2, the application server may write the data that needs to be written into a corresponding memory position in the enhanced Ethernet disk 2 from an RDMA unit of the application server by adopting the RDMA technology. After the data is written into the memory of the hard disk, a second processor of the enhanced Ethernet disk 2 processes the data in a memory segment where the data is written, for example: slice the data, calculate how the data is placed in a platter of the hard disk according to a local hard disk data placement algorithm, and then instruct a hard disk controller to write the data into the platter. The reverse is also true. When the enhanced Ethernet disk 2 writes data into memory of the application server, the second processor of the enhanced Ethernet disk 2 instructs the hard disk controller to read the data from the platter of the hard disk to a cache, processes the data, and provides the processed data to the enhanced Ethernet interface of the enhanced Ethernet disk, and a first processor of the enhanced Ethernet interface invokes the RDMA engine to deliver the data to the memory section in an application server 1 for processing.

The enhanced Ethernet disk directly writes the data that needs to be sent to a remote device into a corresponding memory section of the remote device by adopting the RDMA technology, and the remote device reads the data in the memory segment to perform subsequent service processing. The same manner may also be adopted among enhanced Ethernet disks.

The hard disk provided by this embodiment of the present invention has the enhanced Ethernet interface, uses advantages of the enhanced Ethernet protocol in flow control and time delay processing, and can select, according to a network situation, a device interconnection protocol that helps use advantages of the local area network. In addition, in this embodiment of the present invention, the RDMA engine may further be integrated into the enhanced Ethernet interface, to implement Remote Direct Memory Access among the hard disks, thereby reducing time delay and improving transmission performance.

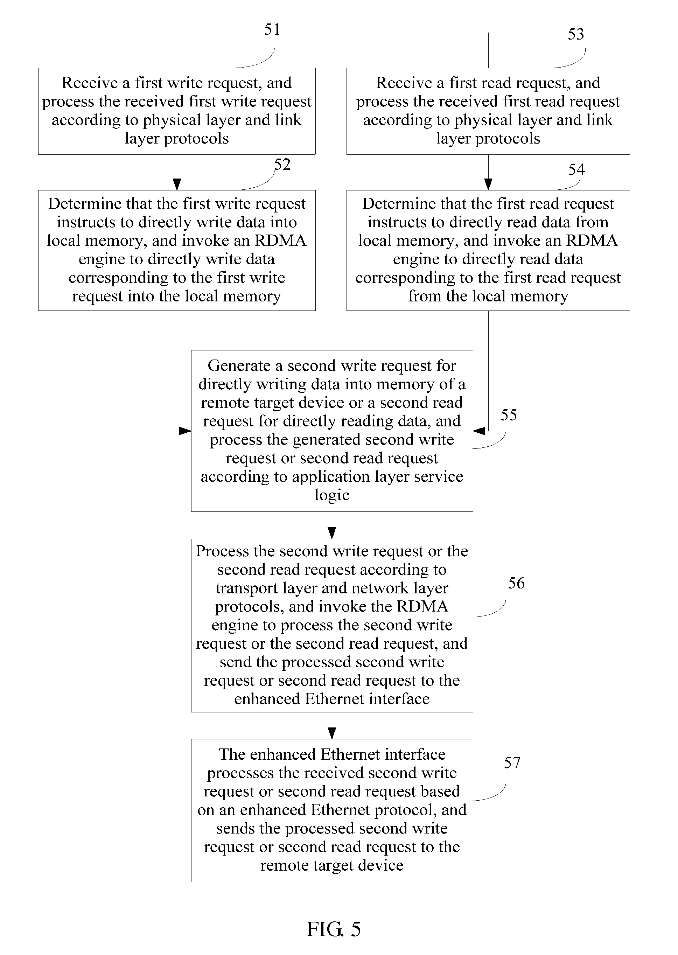

Refer to FIG. 5. An embodiment of the present invention further provides a data processing method, applicable to a hard disk that has an enhanced Ethernet interface provided by this embodiment of the present invention. The enhanced Ethernet interface communicates with a network based on an enhanced Ethernet protocol, and the hard disk is integrated with a remote memory direct access RDMA engine. In this embodiment of the present invention, memory of the hard disk is directly accessed, or a direct memory access request is sent, and the method includes:
Step 51: Receive a first write request, and process the received first write request according to physical layer and link layer protocols; and
Step 52: Determine that the first write request instructs to directly write data corresponding to the first write request into local memory, process the received first write request according to transport layer and network layer protocols, write in an address according to data in the first write request, and invoke the RDMA engine to directly write the data corresponding to the first write request into the local memory.

When receiving the first write request, the enhanced Ethernet interface of the hard disk may process the received first write request according to the physical layer and link layer protocols. When determining that the first write request instructs to directly write the data corresponding to the first write request into the local memory, the processor in the hard disk invokes the RDMA engine to directly write the data corresponding to the first write request into the local memory.

The data processing method provided by this embodiment of the present invention is applicable to the hard disk that has the enhanced Ethernet interface, and the RDMA engine is integrated into the hard disk, for example, may be integrated into a coprocessor of the hard disk, so that the hard disk can directly access the memory, thereby reducing time delay of writing the data and improving the write data efficiency.

In a situation where the hard disk receives, from the hard disk memory, a command of directly reading the data, the method embodiment may further include:
Step 53: Receive a first read request, and process the received first read request according to the physical layer and link layer protocols; and
Step 54: Determine that the first read request instructs to directly read data from the local memory, process the received first read request according to the transport layer and network layer protocols, read out an address according to data in the first read request, and invoke the RDMA engine to directly read the data corresponding to the first read request from the local memory.

Further, same as the description in the apparatus embodiment corresponding to FIG. 2, in a cloud storage application, a local hard disk, as an original copy storage hard disk in a three-copy mechanism, needs to store two copies in the other hard disks. Therefore, the processor in the hard disk may generate a message packet related to copy data. Therefore, the data processing method provided by the embodiment of the present invention further includes:
Step 55: Generate a second write request for directly writing data into memory of a remote target device or a second read request for directly reading data, where the second write request or second read request carries a memory address of data corresponding to the second write request or second read request in the remote target device; and process the generated second write request or second read request according to application layer service logic;
Step 56: Process the second write request or the second read request, which is processed according to the application layer service logic, according to the transport layer and network layer protocols, invoke the RDMA engine to process the second write request or the second read request, and send the processed second write request or second read request to the enhanced Ethernet interface; and
Step 57: The enhanced Ethernet interface processes the received second write request or second read request based on the enhanced Ethernet protocol, and sends the processed second write request or second read request to the remote target device.

In the data processing method provided by this embodiment of the present invention, the RDMA engine is integrated into the hard disk that has the enhanced Ethernet interface, to implement Remote Direct Memory Access among the hard disks, thereby reducing time delay and improving transmission performance.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a flash memory, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A hard disk, comprising:
an enhanced Ethernet interface, configured to communicate with a network based on an enhanced Ethernet protocol, and process a received message packet according to physical layer and link layer protocols;
a first processor, configured to communicate with the enhanced Ethernet interface, and process the received message packet according to transport layer and network layer protocols;
a second processor, configured to separately communicate with a hard disk controller and the first processor, and process the received message packet according to application layer service logic; and
the hard disk controller, configured to separately communicate with the second processor, the first processor, and the enhanced Ethernet interface, and perform an operation on a hard disk drive according to an instruction in the received message packet.

2. The hard disk according to claim 1, wherein the enhanced Ethernet interface supports a Priority-based Flow Control PFC protocol, an Enhanced Transmission Control ETC protocol, and a Data Center Bridging Capabilities Exchange DCBX protocol.

3. The hard disk according to claim 1, wherein the first processor is integrated into the enhanced Ethernet interface.

4. The hard disk according to claim 3, wherein the first processor is specifically configured to communicate with the enhanced Ethernet interface, and perform transport layer and network layer processing on the received message packet according to InfiniBand transport layer and InfiniBand network layer protocols.

5. The hard disk according to claim 3, wherein the first processor is specifically configured to communicate with the enhanced Ethernet interface, and perform transport layer and network layer processing on the received message packet according to Remote Direct Memory Access Protocol RDMAP + Direct Data Placement DDP Protocol + Marker Protocol data unit Aligned MPA + Transmission Control Protocol and Internet Protocol TCP/IP protocol.

6. The hard disk according to any one of claims 3 to 5, wherein the first processor is integrated with a Remote Memory Direct Access RDMA engine.

7. The hard disk according to claim 6, wherein
when the message packet received by the enhanced Ethernet interface is a first write request, the enhanced Ethernet interface is specifically configured to process the received first write request according to the physical layer and link layer protocols; and
the first processor is further configured to determine that the first write request instructs to directly write data corresponding to the first write request into local hard disk memory, write in an address according to data in the first write request, and invoke the RDMA engine to directly write the data corresponding to the first write request into the local memory;
when the message packet received by the enhanced Ethernet interface is a first read request, the enhanced Ethernet interface is specifically configured to process the received first read request according to the physical layer and link layer protocols; and
the first processor is further configured to determine that the first read request instructs to directly read data corresponding to the first read request from the local memory, read out an address according to data in the first read request, and invoke the RDMA engine to directly read out the data corresponding to the first read request from the local memory.

8. The hard disk according to claim 6, wherein
the second processor is further configured to generate a message packet, comprising a second write request for directly writing data into memory of a remote target device or a second read request for directly reading data, wherein the second write request or second read request carries a memory address of data corresponding to the second write request or second read request in the remote target device; and process the generated second write request or second read request according to the application layer service logic, and send the processed second write request or second read request to the first processor;
the first processor is further configured to determine that the second write request or second read request instructs to directly write in or read out corresponding data in memory of the remote target device, invoke the RDMA engine to process the second write request or the second read request, and send the processed second write request or second read request to the enhanced Ethernet interface; and
the enhanced Ethernet interface is specifically configured to communicate with the network based on the enhanced Ethernet protocol, process the received second write request or second read request based on the enhanced Ethernet protocol, and send the processed second write request or second read request to the remote target device.

9. The hard disk according to claim 6, wherein the hard disk is interconnected with an enhanced Ethernet switch based on an enhanced Ethernet protocol.

10. A data processing method, applicable to a hard disk having an enhanced Ethernet interface, wherein the enhanced Ethernet interface communicates with a network based on an enhanced Ethernet protocol, and the hard disk is integrated with a remote memory direct access RDMA engine, and the method comprises:
receiving a first write request, and processing the received first write request according to physical layer and link layer protocols; and
determining that the first write request instructs to directly write data corresponding to the first write request into local memory, processing the received first write request according to transport layer and network layer protocols, writing in an address according to data in the first write request, and invoking the RDMA engine to directly write the data corresponding to the first write request into the local memory.

11. The method according to claim 10, further comprising:
receiving a first read request, and processing the received first read request according to the physical layer and link layer protocols;
determining that the first read request instructs to directly read data from the local memory, processing the received first read request according to the transport layer and network layer protocols, reading out an address according to data in the first read request, and invoking the RDMA engine to directly read the data corresponding to the first read request from the local memory.

12. The method according to claim 10, further comprising:
generating a second write request for directly writing data into a remote target device memory or a second read request for directly reading data, wherein the second write request or second read request carries a memory address of data corresponding to the second write request or second read request in the remote target device; and processing the generated second write request or second read request according to application layer service logic;
processing the second write request or the second read request, which is processed according to the application layer service logic, according to the transport layer and network layer protocols, invoking the RDMA engine to process the second write request or the second read request, and sending the processed second write request or second read request to the enhanced Ethernet interface;
processing, by the enhanced Ethernet interface, the received second write request or second read request based on the enhanced Ethernet protocol, and sending the processed second write request or second read request to the remote target device.
